# EUROPÄISCHE PATENTANMELDUNG

(11) **EP 3 133 671 A1**
(43) Veröffentlichungstag der Anmeldung: **22.02.2017**
(21) Anmeldenummer: 15182062.8
(22) Anmeldetag: 21.08.2015
(51) Int. Cl.: H01M 2/14, H01M 2/16, H01M 2/18, H01M 10/0525, H01M 10/058

(54) **GALVANISCHES ELEMENT**

(71) Anmelder: Lithium Energy and Power GmbH & Co. KG, 70469 Stuttgart (DE)
(72) Erfinder: Wurm, Calin Iulius, 86405 Meitingen (DE); Hiller, Martin Manuel, 70378 Stuttgart (DE)
(74) Vertreter: Bee, Joachim

(57) **Zusammenfassung**

Die Erfindung betrifft ein galvanisches Element (1) umfassend eine positive Elektrode (8), eine negative Elektrode (10) und einen Separator (2), der mit einem Elektrolyt getränkt und zwischen der positiven Elektrode (8) und der negativen Elektrode (10) angeordnet ist, wobei der Separator (2) einen porösen Bereich (4) aufweist, der im Wesentlichen kongruent mit den aktiven Flächen (9, 11) der positiven Elektrode (8) und der negativen Elektrode (10) ist, und dass der Separator (2) einen Bereich außerhalb des porösen Bereichs (4) aufweist, in welchem dessen Poren durch ein Schmelzen des Separators (2) aufgrund einer Hitzeeinwirkung verschlossen sind, so dass Strompfade (12) zwischen der positiven Elektrode (8) und der negativen Elektrode (10) durch den Elektrolyten nur in einem kongruenten Bereich (14) verlaufen können.

Des Weiteren betrifft die Erfindung ein Verfahren zur Herstellung eines galvanischen Elements (1) sowie eine Batterie umfassend ein galvanisches Element (1).

## Beschreibung

Die Erfindung bezieht sich auf ein galvanisches Element, eine Batterie umfassend ein galvanisches Element und ein Verfahren zur Herstellung eines galvanischen Elements nach dem Oberbegriff der unabhängigen Ansprüche.

### Stand der Technik

Lithium-Ionen-Batterien zeichnen sich unter anderem durch eine sehr hohe spezifische Energie und eine äußerst geringe Selbstentladung aus. Die Lithium-Ionen-Zellen einer solchen Batterie besitzen mindestens eine positive und mindestens eine negative Elektrode (Kathode bzw. Anode), die Lithium-Ionen reversibel einlagern (Interkalation) oder wieder auslagern (Deinterkalation) können. Des Weiteren umfassen die Lithium-Ionen-Zellen mindestens einen Separator, der die positive und die negative Elektrode sowohl räumlich als auch elektrisch voneinander trennt. Damit die Interkalation von Lithium-Ionen bzw. die Deinterkalation von Lithium-Ionen in den Elektroden stattfindet, wird ein Lithium-Ionen-Leiter benötigt. Dieser wird in Form eines Flüssig-Elektrolyt bereitgestellt. Poren im verwendeten Separator erlauben es dem Elektrolyten dabei in den Separator einzudringen, so dass Ionen den Separator passieren können.

Zum Herstellen einer Lithium-Ionen-Zelle wird ein galvanisches Element mit einer Schichtstruktur umfassend eine negative Elektrode, eine positive Elektrode und einen Separator zwischen den beiden Elektroden gebildet. Die negative Elektrode, der Separator und die positive Elektrode können ineinander aufgewickelt sein oder aufeinander gestapelt vorliegen. Die positive und die negative Elektrode werden mit Stromableitern kontaktiert, die eine elektrische Verbindung nach außen herstellen. Das so gebildete galvanische Element wird mit einem Elektrolyten getränkt und in einer Verpackung eingeschlossen. Als Verpackung kommen beispielsweise Aluminium-Verbundfolien zum Einsatz. So verpackte Zellen werden wegen ihrer weichen Verpackung auch als Pouch bzw. Softpack bezeichnet. Als Gehäuse werden auch feste Metallgehäuse eingesetzt, beispielsweise in Form von tiefgezogenen oder fließgepressten Gehäuseteilen. In diesem Fall spricht man von festem Gehäuse oder Hardcase.

Aus DE 102 55 121 A1 ist ein Separator für eine Batteriezelle bekannt. Der Separator umfasst einen flexiblen, durchbrochenen Träger und ein poröses Keramikmaterial, mit dem die Durchbrechungen des Trägers gefüllt sind. Das Keramikmaterial ist zur Aufnahme eines ionenleitenden Elektrolyten geeignet und umfasst zur Vermeidung von Dendriten-Entstehung eine erste poröse Schicht einer ersten mittleren Porengröße, welche eine erste Elektrode der Batteriezelle berührt, und eine zweite poröse Schicht einer zweiten mittleren Porengröße, welche die andere Elektrode der Batteriezelle berührt. Die zweite mittlere Porengröße der zweiten porösen Schicht ist kleiner als die erste mittlere Porengröße der ersten porösen Schicht.

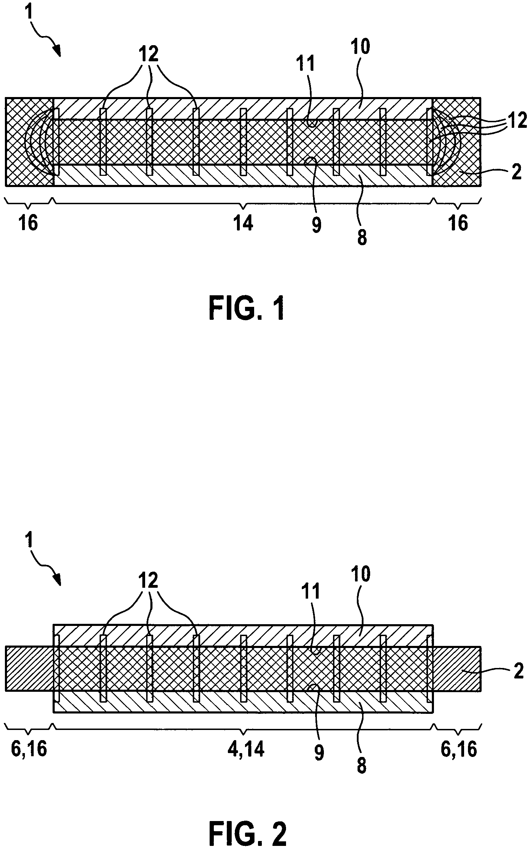

Bei den aus dem Stand der Technik bekannten Batteriezellen werden, wie in Figur 1 dargestellt, die positive Elektrode, der Separator und die negative Elektrode aufeinandergelegt. Der Separator ist mit einem Elektrolyt getränkt und erlaubt den Fluss von Ionen zwischen den beiden Elektroden. Der Separator weist dabei überstehende Bereiche auf, die über die Elektroden hinausragen. Dieser überstehende Bereich ist notwendig, um eine zuverlässige Trennung der beiden Elektroden zu gewährleisten. Ein Ionenfluss ist dabei mit Hilfe des Elektrolyten in dem gesamten vom Separator ausgefüllten Bereich möglich. In den Randbereichen der Elektroden steht somit für die Ionenleitung ein größerer Bereich als im Innenbereich der Schichtstruktur zur Verfügung, so dass der Ionenstrom in den Randbereichen erhöht ist. Die Strompfade, entlang denen die Ionen fließen, sind in der Figur 1 durch die durchgezogenen Linien angedeutet. Der ungleichmäßige Ionenstrom ist nachteilig, da in den Bereichen erhöhter Ionenstromdichte eine lokale Überladung der Elektroden auftritt. Im Fall von Lithium-Ionen-Zellen ist dies besonders problematisch, da dies in Bereichen erhöhter Ionenstromdichte zur Ablagerung von Lithium führen kann, was die Sicherheit der Batterien beeinträchtigt.

Solche dendritischen Ablagerungen oder Abscheidungen, beispielsweise von Lithium, bilden sich beispielsweise beim Laden einer Batteriezelle oder durch Kontaminationen mit Metall, welches beispielsweise beim Produktionsprozess in die Batteriezelle gelangt ist, aus. Die Ablagerungen wachsen senkrecht zur Anode als Dendriten auf der Anode an und können räumlich nachfolgende Elemente, beispielsweise einen Separator, welcher zwischen der Anode und der Kathode angeordnet ist, durchstoßen bzw. durchwachsen. Dies hat meistens einen internen Kurzschluss mit den entsprechenden Sicherheitsrisiken zur Folge. Insbesondere in Randbereichen des galvanischen Elements, also in Bereichen außerhalb des porösen Bereichs des Separators bzw. in Bereichen, welche sich nicht unmittelbar zwischen den Elektroden befinden, sind beispielsweise freie Metalle, beispielsweise von Stromableitern, wie Aluminium oder Kupfer zugänglich, sodass die Gefahr besteht, dass bereits kleine Kontaminationsmengen niederohmige Kurzschlüsse auslösen. Diese sind im besagten Randbereichen besonders kritisch, da hier die Stromableiter beispielsweise stellenweise nicht mit Aktivmaterial beschichtet sind und somit höhere Ströme auftreten im Vergleich zu Bereichen der Stromableiter, welche mit Aktivmaterial beschichtet sind, die bishin zu einem Kurzschluss führen können. Ein Wachstum von Dendriten kann beispielsweise unterbunden werden, indem der Ionenstrom dieser Fremdmetalle, beispielsweise Kupferionen, unterbunden wird.

Es wäre daher wünschenswert, einen gleichmäßigen Ionenstrom über die, insbesondere gesamte, aktive Fläche der Elektroden hinweg zu erreichen und einen Ionenstrom in Bereichen außerhalb des Bereichs, welcher zwischen den beiden Elektroden liegt, zu unterbinden.

### Offenbarung der Erfindung

Es wird ein galvanisches Element vorgeschlagen umfassend eine positive Elektrode, eine negative Elektrode und einen porösen Separator, der mit einem Elektrolyt getränkt und zwischen der positiven Elektrode und der negativen Elektrode angeordnet ist, wobei der Separator einen porösen Bereich aufweist, der im Wesentlichen kongruent mit den aktiven Flächen der positiven Elektrode und der negativen Elektrode ist und, wobei der Separator einen Bereich außerhalb des porösen Bereichs aufweist, in welchem dessen Poren durch ein Schmelzen des Separators aufgrund einer Hitzeeinwirkung verschlossen sind, so dass Strompfade zwischen der positiven Elektrode und der negativen Elektrode durch den Elektrolyten nur in diesem kongruenten Bereich verlaufen.

Dies ist so zu verstehen, dass der Separator lediglich in dem Bereich außerhalb des porösen Bereichs temperiert, erwärmt oder erhitzt wird und schmilzt, nicht aber innerhalb des porösen Bereichs. Unter einer Hitzeeinwirkung soll auch eine Temperierung oder eine Erwärmung verstanden sein. Der Begriff Hitze meint also eine Temperatur, bei der der Separator weich wird, zu schmelzen beginnt oder schmilzt.

Die positive Elektrode des galvanischen Elements liegt dabei an einer Seite des Separators an und/oder ist mit dieser verbunden und die negative Elektrode liegt dabei an der anderen Seite des Separators an und/oder mit dieser verbunden. Die geometrischen Abmessungen des Separators sind dabei so gewählt, dass er über die Elektroden hinausragt. Die beiden Elektroden sind auf den entgegengesetzten Seiten des Separators insbesondere so angeordnet, dass diese sich möglichst exakt gegenüberliegen.

Der Separator ist in einem Bereich porös ausgeführt, wobei der poröse Bereich im Wesentlichen kongruent mit den aktiven Flächen der positiven und der negativen Elektrode überlappt. Mit aktiven Flächen der Elektroden ist der Bereich der Elektroden gemeint, der elektrisch aktiv ist, also mit einem Aktivmaterial beschichtet ist. Der poröse Bereich des Separators ist mit einem Elektrolyt getränkt, so dass eine Ionenleitung möglich ist. Dabei bilden sich Strompfade zwischen den beiden Elektroden aus, entlang denen die Ionen fließen.

Die positive Elektrode (Kathode) umfasst beispielsweise einen Träger, insbesondere eine Folie, aus Aluminium auf die ein Aktivmaterial, beispielsweise eine Kombination verschiedener Lithium-Metall-Oxide, aufgebracht ist.

Die negative Elektrode (Anode) umfasst beispielsweise einen Träger, insbesondere eine Folie, aus Kupfer auf die ein Aktivmaterial aufgetragen ist, welches beispielsweise auf natürlichen und/oder synthetischen Graphiten basiert.

Der Elektrolyt ist beispielsweise in acyclischen Carbonaten (zum Beispiel Ethyl-Methyl-Carbonat, Dimethylcarbonat oder Diethlycarbonat) oder cyclischen Carbonaten (zum Beispiel Ethylencarbonat oder Propylencarbonat) gelöstes Lithium-Hexa-Fluorophosphat (LiPF₆), Lithiumperchlorat (LiClO4), Lithiumhexafluoroarsenat (LiAsF6) oder Lithiumtetrafluoroborat (LiBF4).

Beim Laden bzw. Entladen des galvanischen Elements fließen Lithium-Ionen von einer Elektrode zur anderen durch den Elektrolyten, wobei der Elektrolyt den porösen Bereich des Separators durchdringt. Da nur der Bereich porös ist, der im Wesentlichen mit den aktiven Flächen der Elektroden kongruent ist, gibt es keine Randbereiche, in denen mehr Elektrolyt zur Ionenleitung zur Verfügung steht, als in den Bereichen im Zentrum der Schichtstruktur. Die Strompfade, entlang denen die Ionen fließen, verteilen sich nun gleichmäßig.

Damit die beiden Elektroden mit dem porösen Bereich des Separators kongruent sind, ist es bevorzugt, dass der poröse Bereich des Separators und die aktiven Flächen der positiven Elektrode und der negativen Elektrode bis auf einen Fehler von weniger als 0,1 mm kongruent überlappen.

Je größer die Abweichung ausfällt, desto geringer fällt die Unterdrückung von zusätzlichen Strompfaden in den Randbereichen aus. Die maximal zulässige Abweichung, bei der die Unterdrückung noch ausreichend gut ausfällt, ist dabei auch Abhängig vom chemischen System des galvanischen Elements und den Betriebsbedingungen, insbesondere von der Stromstärke.

Die Hitze bzw. die Energie wird hierbei beispielsweise durch einen Laser, insbesondere einen Infrarot-Laser (IR-Laser), erzeugt. Alternativ wird die Hitze durch eine temperierte Umgebung erzeugt, wie beispielsweise eine temperierte Oberfläche, insbesondere eine temperierte Metalloberfläche. Weiterhin alternativ kann die temperierte Oberfläche beispielsweise Keramiken, Kunststoffe, Gläser und/oder weitere Materialien umfassen.

Das Material des Separators umfasst beispielsweise ein Polyolefin, insbesondere ein Polypropylen und/oder ein Polyethylen, ein fluoriertes Polyolefin, ein Polyimid, ein Polyamid, ein Alkan, ein Polytetrafluorethylen, ein Polyvinylidenfluorid und/oder ein Polyethylenterephthalat. Besonders bevorzugt werden Polyolefine.

Zur Reduzierung von lokalen Maxima im Ionenstrom ist es auch denkbar, die geometrischen Abmessungen der positiven oder negativen Elektrode kleiner auszuführen, als die der jeweils anderen Elektrode. Die Anode ist dabei beispielsweise bis zu 3 mm pro Kante breiter als die Kathode.

Des Weiteren wird eine Batterie vorgeschlagen, die mindestens ein galvanisches Element wie soeben beschrieben umfasst. Diese Batterie kann je nach Ausführungsvariante als Fahrzeugbatterie, als Gerätebatterie oder als stationäre Industriebatterie ausgeführt sein.

Des Weiteren wird ein Verfahren zur Herstellung eines galvanischen Elements vorgeschlagen, umfassend die Schritte:
a) Bereitstellen eines Separators, wobei dieser porös ist, so dass ein Elektrolyt eindringen kann, und dessen Abmessungen größer sind als die einer aktiven Fläche von einer ersten Elektrode und einer zweiten Elektrode,
b) Erzeugen eines porösen Bereichs durch Schließen von Poren des Separators außerhalb des porösen Bereichs wobei der Separator außerhalb des porösen Bereichs erhitzt wird, sodass dieser außerhalb des porösen Bereichs schmilzt, wodurch die Poren des Separators außerhalb des porösen Bereichs verschlossen werden,
wobei der poröse Bereich so angeordnet wird, dass dieser im Wesentlichen kongruent mit den aktiven Flächen der positiven Elektrode und der negativen Elektrode ist, so dass Strompfade zwischen der positiven Elektrode und der negativen Elektrode durch einen Elektrolyten nur in einem kongruenten Bereich verlaufen können.

Im ersten Schritt a) des Verfahrens wird der Separator bereitgestellt. Die Abmessungen des Separators sind dabei so gewählt, dass er größer ist als die aktive Fläche der Elektroden. Das Material des Separators ist porös, so dass ein Elektrolyt eindringen kann. Der Elektrolyt stellt in dem fertigen galvanischen Element den Ionenleiter dar, durch den Ionen von einer Elektrode zur anderen wandern können. Der Separator selbst ist elektrisch isolierend, so dass er die beiden Elektroden räumlich und elektrisch voneinander trennt.

Im zweiten Schritt b) des Verfahrens wird ein poröser Bereich in dem Separator erzeugt. Dazu werden die Poren des Separators außerhalb des porösen Bereichs erhitzt bzw. erwärmt, sodass der Separator außerhalb des porösen Bereichs schmilzt und so die Poren in dem Bereich außerhalb des porösen Bereichs verschlossen werden. Unter einem Schmelzen wird hier beispielsweise verstanden, dass der Separator in dem Bereich außerhalb des porösen Bereichs weich wird und sich die Poren ausfüllen und dadurch verschlossen werden.

In einem weiteren Schritt c) werden die erste Elektrode, der Separator und die zweite Elektrode aufeinander gestapelt und/oder ineinander aufgewickelt, letzteres ergibt beispielsweise eine so genannte Jelly Roll. Dieser Schritt folgt beispielsweise auf Schritt b). Alternativ erfolgt Schritt c) beispielsweise zwischen Schritt a) und Schritt b).
Die erste Elektrode ist hierbei beispielsweise eine positive Elektrode (Kathode). Diese kann in einer Ausführungsform eine Aluminiumfolie als Trägermaterial umfassen, welches mit einem Aktivmaterial basierend auf der Kombination verschiedener Lithium-Metall-Oxide beschichtet wurde. Die zweite Elektrode ist beispielsweise eine negative Elektrode (Anode). Eine Anode für eine Lithium-Batteriezelle kann beispielsweise durch Beschichten einer Kupfer-Trägerfolie mit einem Aktivmaterial basierend auf natürlichen und/oder synthetischen Graphiten erhalten werden.
In einer Ausführungsform wird der Separator mit den Elektroden verbunden, sodass sich der Separator zwischen den Elektroden befindet. Dies kann beispielsweise durch Verpressen geschehen. Alternativ werden diese Komponenten lediglich aufeinander gestapelt und ggf. ineinander aufgewickelt. Die geometrischen Abmessungen der aktiven Fläche der zweiten Elektrode entsprechen im Wesentlichen den Abmessungen des porösen Bereichs.

In weiteren Herstellungsschritten werden die erste und die zweite Elektrode elektrisch kontaktiert und die durch die Schritte a), b) bzw. a), c), b) bzw. a), b), c) erzeugte Schichtstruktur mit einer Verpackung umschlossen. Spätestens kurz vor dem Verschließen der Verpackung wird ein Elektrolyt eingefüllt, so dass der Separator mit diesem getränkt ist. Als Elektrolyt wird beispielsweise das Lithium-Leitsalz Lithium-Hexa-Fluorophosphat (LiPF₆) in einem organischen Lösungsmittel gelöst verwendet.

Bevorzugt werden Lage und Größe des porösen Bereichs des Separators so gewählt, dass die aktiven Flächen der Elektroden mit dem porösen Bereich des Separators bis auf einen Fehler von weniger als 0,1 mm kongruent überlappen. Ebenso wird das Verbinden der beiden Elektroden im Separator bevorzugt so ausgeführt, dass der poröse Bereich des Separators und die aktiven Flächen der positiven Elektrode und der negativen Elektrode bis auf einen Fehler von weniger als 0,1 mm kongruent überlappen.

Das Material des Separators umfasst beispielsweise ein Polyolefin, insbesondere ein Polypropylen und/oder ein Polyethylen, ein fluoriertes Polyolefin, ein Polyimid, ein Polyamid oder ein Polyethylenterephthalat. Besonders bevorzugt werden Polyolefine.

Der Separator wird außerhalb des porösen Bereichs beispielsweise mittels eines Lasers, insbesondere eines Infrarot-Lasers, erhitzt.
Alternativ wird der Separator außerhalb des porösen Bereichs mittels einer tempereierten Umgebung, beispielsweise einer temperierten Oberfläche, insbesondere einer temperierten Metall-, Keramik,- Kunststoff- oder Glasoberfläche, erzeugt. Hierbei wird der Bereich des Separators außerhalb des porösen Bereichs beispielsweise über eine wärmende Oberfläche geführt, sodass sich der Bereich des Separators außerhalb des porösen Bereichs erwärmt bzw. erhitzt und sich dessen Poren verschließen. Die temperierte Oberfläche ist beispielsweise eine Walze, insbesondere eine Metallwalze. Alternativ wird die temperierte Oberfläche einseitig oder beidseitig temporär auf den Separator aufgelegt oder aufgepresst.

In einer weiteren besonders vorteilhaften Ausführungsform weist die temperierte Umgebung, beispielsweise die temperierte Oberfläche, zumindest einen wärmenden Bereich auf, über welchen der Bereich des Separators außerhalb des porösen Bereichs erhitzt wird und zusätzlich weist die temperierte Umgebung, beispielsweise die temperierte Oberfläche, zumindest einen kühlenden Bereich auf, über welchen der poröse Bereich des Separators gekühlt wird. Hierzu wird der Separator beispielsweise über die temperierte Oberfläche geführt. Die temperierte Oberfläche ist beispielsweise eine Walze, insbesondere eine Metallwalze, deren Oberfläche bereichsweise erhitzt und gekühlt wird. Alternativ wird der Separator über zumindest zwei Walzen, insbesondere drei Walzen, geführt, wobei die Walze, über die der poröse Bereich des Separators geführt wird gekühlt wird und die Walze, bzw. die Walzen, über welche der/die Bereich/e des Separators außerhalb des porösen Bereichs geführt wird/werden erwärmt bzw. erhitzt wird/werden. Herbei kann beispielsweise beidseitig der kühlenden Walze eine wärmende Walze angeordnet sein.
Alternativ wird die temperierte Oberfläche einseitig oder beidseitig temporär auf den Separator aufgelegt oder aufgepresst.

Eine weitere Ausführungsform sieht vor, dass der poröse Bereich des Separators gekühlt wird, beispielsweise während Bereiche außerhalb des porösen Bereichs des Separators mittels eines Lasers erwärmt bzw. erhitzt werden, sodass sich die Poren in diesem Bereich verschließen.

### Vorteile der Erfindung

Bei dem vorgeschlagenen galvanischen Element wird ein poröser Separator verwendet, der lediglich in dem Bereich für den ionenleitenden Elektrolyten durchgängig ist, in dem sich die positive und die negative Elektrode, insbesondere kongruent, überlappen. Dadurch, dass die Poren des Separators in dem Bereich außerhalb des porösen Bereichs verschlossen sind, wird vermieden, dass sich in den Randbereichen der Elektroden mehr Strompfade für die Ionen ausbilden können, als in den Bereichen im Zentrum der Struktur. Der Ionenstrom verläuft so gleichmäßig zwischen den beiden Elektroden, lokal an den Rändern auftretende Maxima werden vermieden. Vorteilhaft hierbei ist zudem, dass verhindert wird, dass Verunreinigungen, wie beispielsweise Kupferpartikel, welche sich bei positiven Potentialen der Kathode auflösen, in Randbereichen des galvanischen Elements, also in Bereichen außerhalb des porösen Bereichs des Separators bzw. in Bereichen, welche sich nicht unmittelbar zwischen den Elektroden befinden, als Ionenstrom zur Anode wandern und dort reduziert werden. Eine solche Reduktion hätte beispielsweise niederohmige Dendriten zur Folge, die beispielsweise zur Kathode durchwachsen und somit zu internen Kurzschlüssen führen können. Mit der vorliegenden Erfindung wird die Sicherheit des galvanischen Elements bzw. der Batterie somit deutlich erhöht.

Durch den gleichmäßigen Ionenstrom wird verhindert, dass es in Bereichen mit hohem Ionenstrom zu einer lokalen Überladung der Elektroden kommt, wodurch sich Lithium ablagern könnte, insbesondere in Form von Dendriten, und die Sicherheit der Batterie beeinträchtigen würde.

In einer Ausführungsform der Erfindung ist es vorteilhaft, wenn die geometrischen Abmessungen einer der beiden Elektroden kleiner als die der anderen gewählt wird, da somit nicht auf aktive Flächen der Elektroden verzichtet werden muss, so dass durch die vorgeschlagene Lösung die Energiedichte des galvanischen Elements nicht beeinträchtigt wird.

In einer weiteren Ausführungsform ist es vorteilhaft, wenn die Hitzeeinwirkung mittels eines Lasers erfolgt, da die Erwärmungszeit des entsprechenden Bereichs des Separators sehr gering ist und dieser Arbeitsschritt somit sehr schnell erfolgen kann. Desweiteren kann mittels eines Lasers sehr präzise eingestellt werden, welcher Bereich des Separators erwärmt wird.
Desweiteren ist es besonders vorteilhaft, wenn die Hitzeeinwirkung mittels eines IR-Lasers erfolgt, da mittels diesem eine hochpräzise Fokussierung erfolgt und IR-Laser zudem wartungsarm sind und nahezu verschleißfrei arbeiten.

In einer weiteren besonders bevorzugten Ausführungsform ist es vorteilhaft, wenn die temperierte Umgebung, beispielsweise die temperierte Oberfläche, zumindest einen wärmenden Bereich aufweist, über welchen der Bereich des Separators außerhalb des porösen Bereichs erhitzt wird und zusätzlich einen kühlenden Bereich, über welchen der poröse Bereich des Separators gekühlt wird. Vorteilhaft hierbei ist, dass auf diese Weise eine sehr exakte Trennung zwischen dem porösen Bereich des Separators und dem Bereich außerhalb des porösen Bereichs des Separators erreicht wird.

### Kurze Beschreibung der Figuren

Es zeigen:
- Figur 1: ein galvanisches Element nach dem Stand der Technik und
- Figur 2: eine erste Ausführungsform eines erfindungsgemäßen galvanischen Elements.
- Figur 3: eine zweite Ausführungsform eines erfindungsgemäßen galvanischen Elements.

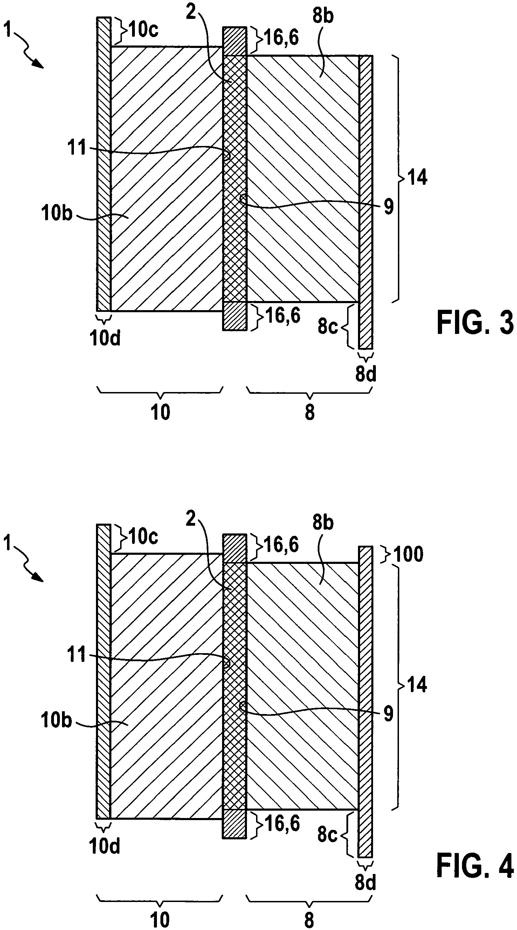

- Figur 3: eine Variante der zweiten Ausführungsform eines erfindungsgemäßen galvanischen Elements.

Figur 1 zeigt ein galvanisches Element 1 nach dem Stand der Technik. Das galvanische Element 1 umfasst eine Schichtfolge mit einer positiven Elektrode 8, einem Separator 2 und einer negativen Elektrode 10. Die positive Elektrode 8 ist mit ihrer aktiven Fläche 9 mit dem Separator 2 verbunden oder liegt an diesem an, die negative Elektrode 10 wiederum ist mit ihrer aktiven Fläche 11 mit dem Separator 2 verbunden oder liegt an diesem an.

Die positive Elektrode 8 umfasst beispielsweise eine Aluminiumfolie als Träger, auf die ein Aktivmaterial basierend auf einer Kombination verschiedener Lithium-Metall-Oxide aufgebracht ist. Die negative Elektrode 10 ist beispielsweise eine Kupferfolie, auf die ein Aktivmaterial basierend auf natürlichen und/oder synthetischen Graphiten aufgebracht ist.

Das Material des Separators 2 ist beispielsweise ein Polyolefin und weist eine Vielzahl von Poren auf, durch die ein Elektrolyt in den Separator 2 eindringen kann. Der Elektrolyt ist beispielsweise ein in organischem Lösungsmittel gelöstes Lithium-Leitsalz wie beispielsweise Lithium-Hexa-Fluorophosphat (LiPF₆). Der Separator 2 selbst ist ein elektrischer Isolator, so dass er die positive Elektrode 8 von der negativen Elektrode 10 sowohl elektrisch als auch räumlich trennt.

Da der Separator 2 mit dem Elektrolyten getränkt ist, ist dieser für Ionen leitfähig, so dass im Fall einer Lithium-Ionen-Batterie Lithium-Ionen von einer Elektrode (8, 10) zur anderen fließen können. Dabei bildet sich ein Ionenstrom aus, der mit den Strompfaden 12 in der Figur 1 angedeutet ist. Dabei ist der Ionenstrom in den Randbereichen 16 größer als in dem kongruenten Bereich 14, in dem sich die positive Elektrode 8 und die negative Elektrode 10 kongruent überlappen. Der erhöhte Ionenstrom in den Randbereichen 16 ist darin begründet, dass in den Randbereichen 16 im Gegensatz zum kongruenten Bereich 14 zusätzlicher Elektrolyt zum Ionentransport zur Verfügung steht und der dem Ionenstrom entgegenstehende Widerstand somit geringer ist. Der in den Randbereichen 16 höhere Ionenstrom ist durch die dichter liegenden Strompfade 12 in der Figur 1 angedeutet.

Durch den in den Randbereichen 16 erhöhten Ionenstrom kann es an den Rändern der Elektroden 8, 10 zu einer lokalen Überladung kommen, bei der Lithium abgelagert wird. Dies ist unerwünscht, da es die Sicherheit der Batterie negativ beeinträchtigt.

Figur 2 zeigt eine erste Ausführungsform des erfindungsgemäßen galvanischen Elements 1. Das galvanische Element 1 umfasst, wie mit Bezug zur Figur 1 beschrieben, die Schichtfolge mit der positiven Elektrode 8, dem Separator 2 und der negativen Elektrode 10.

Der Separator 2 ist ein poröses Material, der die positive Elektrode 8 elektrisch und räumlich von der negativen Elektrode 10 trennt. Durch die Poren kann ein Elektrolyt in den Separator 2 eindringen, um eine Ionenleitung zwischen den beiden Elektroden 8, 10 zu ermöglichen.

In der in Figur 2 dargestellten Ausführungsform wurden in den Randbereichen 16 die Poren des Separators 2 durch eine Hitzeeinwirkung verschlossen, so dass undurchdringliche Bereiche 6 entstehen, in die der Elektrolyt nicht eindringen kann. Hierbei wird der Separator beispielsweise weich sodass die Poren in dem Bereich außerhalb des porösen Bereichs aufgefüllt sind. Die Hitzeeinwirkung erfolgt beispielsweise mittels eines Lasers, insbesondere mittels eines Infrarot-Lasers und/oder mittels einer temperierten Umgebung, wie beispielsweise einer temperierten Oberfläche, insbesondere einer temperierten Metall-, Keramik, Kunststoff- oder Glasoberfläche.
Die undurchdringlichen Bereiche 6 sind dabei so platziert, dass ein poröser Bereich 4 entsteht, der mit den aktiven Flächen 9, 11 der beiden Elektroden 8, 10 in kongruenter Überlappung ist. Ein Ionenstrom kann sich somit nur in dem kongruenten Bereich 14 ausbilden. Die Strompfade 12, entlang denen die Ionen fließen, sind nun gleichmäßig über den kongruenten Bereich 14 verteilt, es treten keine Maxima im Ionenstrom in den Randbereichen der Elektroden 8 und 10 auf. Da auf diese Weise keine lokale Überladung auftritt, wird die Zyklenstabilität des so gebildeten galvanischen Elements 1 verbessert.

Figur 3 zeigt eine zweite Ausführungsform des erfindungsgemäßen galvanischen Elements 1. Das galvanische Element 1 umfasst die Komponenten gemäß Figur 2, welche bereits in den Erläuterungen zu den Figuren 1 und 2 beschrieben sind. Die positive Elektrode 8 umfasst beispielsweise eine Aluminiumfolie als Träger 8d, auf die bereichsweise ein Aktivmaterial 8b basierend auf einer Kombination verschiedener Lithium-Metall-Oxide aufgebracht ist. In einem weiteren Bereich 8c ist der Träger 8d nicht mit Aktivmaterial 8b beschichtet. An dieser Stelle ist der Träger 8d, welcher auch Stromableiter genannt wird, beispielsweise etwas länger ausgebildet und dient zur elektrischen Kontaktierung.
Die negative Elektrode 10 umfasst beispielsweise eine Kupferfolie als Träger 10d, auf die ein Aktivmaterial 10b basierend auf natürlichen und/oder synthetischen Graphiten aufgebracht ist. In einem weiteren Bereich 10c ist der Träger 10d nicht mit Aktivmaterial 8b beschichtet. An dieser Stelle ist der Träger 8d, welcher auch Stromableiter genannt wird, beispielsweise etwas länger ausgebildet und dient zur elektrischen Kontaktierung.
Im Gegensatz zu der ersten Ausführungsform, welche in Figur 2 dargestellt ist, weisen die Elektroden 8, 10 nicht die gleichen geometrischen Abmessungen auf. In Figur 3 weist die positive Elektrode 8 kleinere geometrische Abmessungen auf als die negative Elektrode 10. Der undurchdringliche Bereich 6 des Separators 2 liegt somit bereichsweise auch an dem Aktivmaterial 10b der negativen Elektrode 10 an. Alternativ kann auch die negative Elektrode 10 kleinere geometrische Abmessungen aufweisen als die positive Elektrode 8

In Figur 4 ist eine Variante des galvanischen Elements gemäß Figur 3 dargestellt, in welcher der Träger 8d bzw. der Stromableiter der der positiven Elektrode auch auf der Seite, welche nicht elektrisch Kontaktiert wird länger ausgebildet ist, beispielsweise aufgrund von Fertigungstoleranzen, sodass der Träger 8d einen nicht mit Aktivmaterial 8b beschichteter Bereich 100 aufweist. Alternativ oder zusätzlich kann auch der Träger 10d der negativen Elektrode einen solchen zusätzlichen unbeschichteten Bereich aufweisen.
Gerade in solch unbeschichteten Bereichen 100 der Träger 8d bzw. 10d sorgen die undurchdringlichen Bereiche 6 des Separators 2 außerhalb des porösen Bereichs 4 des Separators 2 dafür, dass sich hier keine höheren Ströme bilden können, die gegebenenfalls zu einem Kurzschluss führen können. Auch ist somit sichergestellt, dass Verunreinigungen, beispielsweise Kupfer-oder Aluminiumpartikel, nicht in Randbereichen 16 zu der negativen Eletkrode 10 wandern können.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Galvanisches Element (1) umfassend eine positive Elektrode (8), eine negative Elektrode (10) und einen porösen Separator (2), der mit einem Elektrolyt getränkt und zwischen der positiven Elektrode (8) und der negativen Elektrode (10) angeordnet ist, **dadurch gekennzeichnet, dass** der Separator (2) einen porösen Bereich (4) aufweist, der im Wesentlichen kongruent mit den aktiven Flächen (9, 11) der positiven Elektrode (8) und der negativen Elektrode (10) ist und, dass der Separator (2) einen Bereich außerhalb des porösen Bereichs (4) aufweist, in welchem dessen Poren durch ein Schmelzen des Separators (2) aufgrund einer Hitzeeinwirkung verschlossen sind, so dass Strompfade (12) zwischen der positiven Elektrode (8) und der negativen Elektrode (10) durch den Elektrolyten nur in einem kongruenten Bereich (14) verlaufen.

2. Galvanisches Element (1) nach Anspruch 1, **dadurch gekennzeichnet, dass** der poröse Bereich (4) des Separators (2) und die aktiven Flächen (9, 11) der positiven Elektrode (8) und der negativen Elektrode (10) bis auf einen Fehler von weniger als 0,1 mm kongruent überlappen.

3. Galvanisches Element (1) nach einem der vorhergehenden Ansprüche, **dadurch gekennzeichnet, dass** die Hitzeeinwirkung durch einen Laser, insbesondere einen Infrarot-Laser, erzeugt ist.

4. Galvanisches Element (1) nach einem der vorhergehenden Ansprüche, **dadurch gekennzeichnet, dass** die Hitzeeinwirkung durch eine temperierte Umgebung, beispielsweise eine temperierte Oberfläche, insbesondere eine temperierte Metall-, Keramik-, Kunststoff- oder Glasoberfläche, erzeugt ist.

5. Galvanisches Element (1) nach einem der vorhergehenden Ansprüche, **dadurch gekennzeichnet, dass** das Material des Separators (2) ein Polyolefin, ein fluoriertes Polyolefin, ein Polyimid, ein Polyamid und/oder ein Polyethylenterephthalat umfasst.

6. Batterie umfassend mindestens ein galvanisches Element (1) nach einem der vorhergehenden Ansprüche.

7. Verfahren zur Herstellung eines galvanischen Elements (1) umfassend die Schritte:
a) Bereitstellen eines Separators (2), wobei dieser porös ist, so dass ein Elektrolyt eindringen kann, und dessen Abmessungen größer sind als die einer aktiven Fläche (9, 11) von einer ersten Elektrode (8) und einer zweiten Elektrode (10),
b) Erzeugen eines porösen Bereichs (4) durch Schließen von Poren des Separators (2) außerhalb des porösen Bereichs (4) wobei der Separator (2) außerhalb des porösen Bereichs (4) erhitzt wird, sodass dieser außerhalb des porösen Bereichs schmilzt, wodurch die Poren des Separators (2) außerhalb des porösen Bereichs (4) verschlossen werden.
wobei der poröse Bereich (4) so angeordnet wird, dass dieser im Wesentlichen kongruent mit den aktiven Flächen (9, 11) der positiven Elektrode (8) und der negativen Elektrode (10) ist, so dass Strompfade (12) zwischen der positiven Elektrode (8) und der negativen Elektrode (10) durch einen Elektrolyten nur in einem kongruenten Bereich (14) verlaufen können,

8. Verfahren nach Anspruch 7, **dadurch gekennzeichnet, dass** ein weiterer Schritt c) erfolgt:
c) Aufeinander Stapeln und/oder ineinander Aufwickeln der ersten Elektrode (8), des Separators (2) und der zweiten Elektrode (10), wobei Schritt c) auf Schritt b) folgt.

9. Verfahren nach Anspruch 7, **dadurch gekennzeichnet, dass** ein weiterer Schritt c) erfolgt:
c) Aufeinander Stapeln und/oder ineinander Aufwickeln der ersten Elektrode (8), des Separators (2) und der zweiten Elektrode (10), wobei Schritt c) zwischen Schritt a) und Schritt b) erfolgt.

10. Verfahren nach einem der Ansprüche 7 - 9, **dadurch gekennzeichnet, dass** der poröse Bereich (4) des Separators (2) und die aktiven Flächen (9, 11) der positiven Elektrode (8) und der negativen Elektrode (10) bis auf einen Fehler von weniger als 0,1 mm kongruent überlappen.

11. Verfahren nach einem der Ansprüche 7 - 10, **dadurch gekennzeichnet, dass** das Material des Separators (2) ausgewählt ist aus Polyolefinen, fluorierte Polyolefinen, Polyimiden, Polyamiden und Polyethylenterephthalaten.

12. Verfahren nach einem der Ansprüche 7 - 11, **dadurch gekennzeichnet, dass** der Separator (2) außerhalb des porösen Bereichs (4) mittels eines Lasers, insbesondere eines Infrarot-Lasers, erhitzt wird.

13. Verfahren nach einem der Ansprüche 7 - 12, **dadurch gekennzeichnet, dass** der Separator (2) außerhalb des porösen Bereichs (4) mittels einer temperierten Umgebung, beispielsweise einer temperierten Oberfläche, insbesondere einer temperierten Metall-, Keramik-, Kunststoff- oder Glasoberfläche, erhitzt wird.

14. Verfahren nach Anspruch 13, **dadurch gekennzeichnet, dass** die temperierte Umgebung, beispielsweise die temperierte Oberfläche, zumindest einen wärmenden Bereich aufweist, über welchen der Bereich des Separators außerhalb des porösen Bereichs erhitzt wird und zusätzlich einen kühlenden Bereich aufweist, über welchen der poröse Bereich (4) des Separators (2) gekühlt wird.
